# EUROPEAN PATENT APPLICATION

(11) **EP 1 548 730 A2**
(43) Date of publication of application: **29.06.2005**
(21) Application number: 04030629.2
(22) Date of filing: 23.12.2004
(51) Int. Cl.: G11B 19/02

(54) **Method for establishing recording quality in digital recording device**

(30) Priority: 26.12.2003 KR 2003097513
(71) Applicant: Humax Co., Ltd., Yougin City, Kyonggi-Do 449-080 (KR)
(72) Inventor: Park, Si Young, Sungnam-si Kyonggi-do, 463-020 (KR)
(74) Representative: Wagner, Bernhard Peter

(57) **Abstract**

The present invention relates to a method for establishing a recording quality in a digital recording device. In the present invention, still images associated with a plurality of recording qualities having different levels are displayed on a recording-quality selection menu image, and data streams are recorded at a recording quality selected through the recording-quality selection menu image. The still images are generated while a picture captured from video streams being differently encoded at the recording qualities. Otherwise, the still images are pre-stored in the digital recording device while being classified according to the recording qualities, and are read from the digital recording device. Also, the still images are displayed along with information associated with recording times for every recording quality. Therefore, a user easily compares video-data qualities in response to individual recording qualities with one another, and correctly selects a desired recording quality from among a plurality of recording qualities.

## Description

### BACKGROUND OF THE INVENTION

### Field of the Invention

The present invention relates to a method for establishing a recording quality in a digital recording device, and more particularly to a method for allowing a user to record desired data at a desired recording quality using a digital recording device such as a DVD-recorder or an HDD-recorder.

### Description of the Related Art

In recent times, digital recording devices such as a DVD-recorder or an HDD-recorder have been newly developed and made commercially available. A user of the digital recording device can store and reproduce high-quality video data streams and high-quality audio data streams in an optical disc or an HDD.

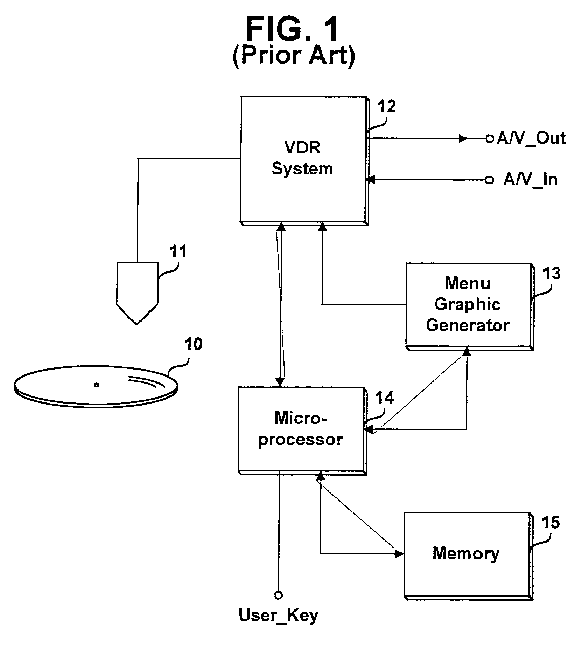

The digital recording device such as a DVD-recorder includes an optical pickup unit 11, a Video Disc Recording (VDR) system 12, a menu graphic generator 13, a microprocessor 14, and a memory 15, etc., as shown in Fig. 1.

If an optical disc 10 such as a DVD-RW is seated in the digital recording device, the microprocessor 14 reads navigation information recorded in a Lead-In area of the optical disc 10, and stores the read navigation information in the memory 15.

The microprocessor 14 refers to the navigation information stored in the memory 15 upon receipt of a request from a user, and controls the VDR system 12, such that it reproduces video and audio data recorded in a data area of the optical disc 10 or records video and audio data received from an external part in the data area of the optical disc 10.

If the microprocessor 14 records data in the optical disc 10 upon receipt of a request from a user, it controls the VDR system 12, such that video or audio data is encoded at a user-selected recording quality and is recorded in the optical disc 10.

For example, if the recording quality is set to High Quality (HQ) according to a control signal of the microprocessor 14, the VDR system 12 encodes video data at a bit rate of 9.72 Mbits/sec, and encodes audio data at a bit rate of 384 Kbits/sec, such that it records high-quality video data and high-quality audio data therein. If the recording quality is set to Standard Quality (SQ), the VDR system 12 encodes video data at a bit rate of 5.07 Mbits/sec, and encodes audio data at a bit rate of 256 Kbits/sec, such that it records standard-quality video data and standard-quality audio data therein. If the recording quality is set to Low Quality (LQ), the VDR system 12 encodes video data at a bit rate of 3.38 Mbits/sec, and encodes audio data at a bit rate of 256 Kbits/sec, such that it records low-quality video data and standard-quality audio data therein. If the recording quality is set to Extension Quality (EQ), the VDR system 12 encodes video data at a bit rate of 2.54 Mbits/sec, and encodes audio data at a bit rate of 256 Kbits/sec, such that it records the lowest-quality video data and standard-quality audio data therein.

Therefore, the user of the above-mentioned digital recording device such as a DVD-recorder sets a desired recording quality to an HQ mode, such that high-quality video data and high-quality audio data are recorded in the digital recording device. Otherwise, the user of the digital recording device sets a desired recording quality to the EQ mode, such that the lowest-quality video data and a standard-quality audio data can be recorded in the digital recording device during a long period of time.

However, conventional digital recording devices do not allow the user to directly compare video-data qualities corresponding to individual recording qualities of HQ, SQ, LQ, and EQ modes with one another. Therefore, the user may unexpectedly record video and/or audio data in the digital recording device at undesired quality. Also, in order to allow the user to recognize video-data qualities corresponding to individual recording qualities, the digital recording device must separately reproduce a plurality of video data units prerecorded according to individual recording qualities.

### SUMMARY OF THE INVENTION

Therefore, the present invention has been made in view of the above problems, and it is an object of the present invention to provide a method for allowing a user to correctly select a desired recording quality from among a plurality of recording qualities in a variety of digital recording devices such as DVD-recorders or HDD-recorders.

It is another object of the present invention to provide a method for allowing a user to easily compare video-data qualities corresponding to individual recording qualities with one another in a digital recording device.

In accordance with the present invention, the above and other objects can be accomplished by a method for establishing a recording quality in a digital recording device, comprising the steps of: displaying still images associated with a plurality of recording qualities having different levels on a recording-quality selection menu image; and recording data streams at a recording quality selected through the recording-quality selection menu image.

Preferably, the still images may be generated while a picture captured from video streams being differently encoded at the recording qualities having different levels. Otherwise, the still images may be pre-stored in the digital recording device while being classified according to the recording qualities having different levels, and may be read from the digital recording device. Also, the still images may be displayed along with information associated with recording times for every recording quality.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram illustrating a conventional digital recording device;
Fig. 2 is a block diagram illustrating a digital recording device according to the present invention;
Fig. 3 is a flow chart illustrating a method for establishing a recording quality in a digital recording device in accordance with a preferred embodiment of the present invention;
Fig. 4 is an exemplary view illustrating a menu image for use in a recording quality setup mode displayed on a screen in accordance with a preferred embodiment of the present invention;
Fig. 5 is a flow chart illustrating a method for establishing a recording quality in a digital recording device in accordance with another preferred embodiment of the present invention; and
Fig. 6 is an exemplary view illustrating a menu image for use in a recording quality setup mode displayed on a screen in accordance with another preferred embodiment of the present invention.

### DETAILED DESCRIPTION OF PREFFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

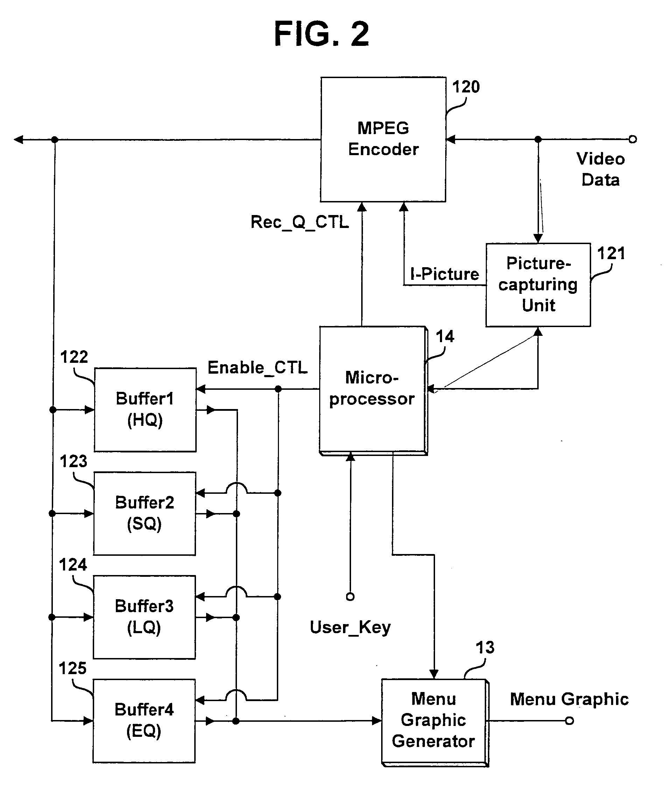

The method for establishing a recording quality according to the present invention is applicable to a variety of digital recording devices such as HDD-recorders or DVD-recorders. For example, a DVD-recorder according to the present invention includes an optical pick unit 11, a VDR system 12, a menu graphic generator 13, a microprocessor 14, and a memory 15, etc., as shown in Fig. 1. The VDR system 12 may include an MPEG encoder 120, a picture-capturing unit 121, and first to fourth buffers 122, 123, 124, and 125, as shown in Fig. 2.

The microprocessor 13 controls the picture-capturing unit 121 when a user selects a desired recording quality, captures one Intra-Picture (I-Picture) from among input video data streams, and controls the MPEG decoder 120, such that the captured I-picture is differently encoded at HQ, SQ, LQ, and EQ recording qualities.

The microprocessor 14 selectively enables the first to fourth buffers 122, 123, 124, and 125, stores the encoded HQ/SQ/LQ/EQ still images in the first, second, third and fourth buffers 122, 123, 124, and 125, respectively, and controls the menu graphic generator 13, such that it displays HQ/SQ/LQ/EQ still images on a menu image on which a user can select a desired recording quality. In this case, information associated with individual recording times of HQ/SQ/LQ/EQ recording qualities, for example, recording-time ratio information (Rec_time_ratio), is displayed on the menu screen in association with the HQ/SQ/LQ/EQ recording qualities.

Therefore, the user can easily compare video-data qualities in response to individual recording qualities with one another, and can correctly select a desired recording quality. A detailed description associated with the above-mentioned operation will hereinafter be described with reference to the annexed drawings.

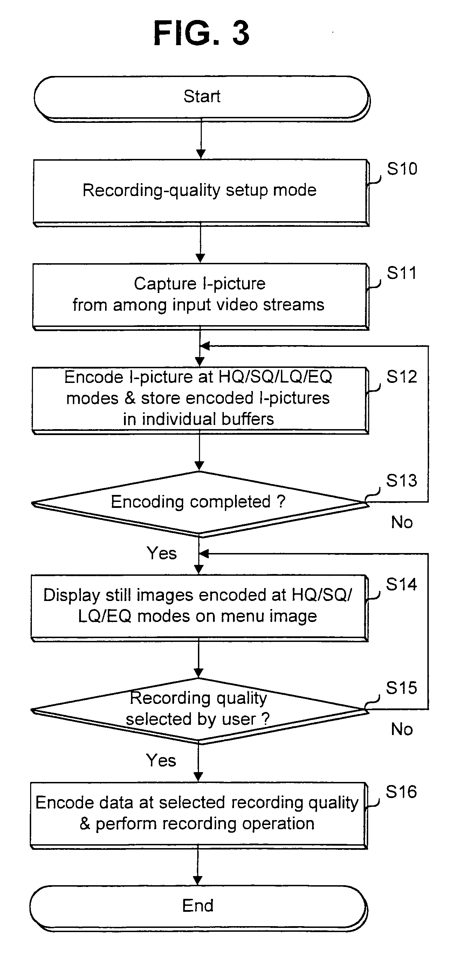

Fig. 3 is a flow chart illustrating a method for establishing a recording quality in a digital recording device in accordance with a preferred embodiment of the present invention. If a user requests a recording-quality setup mode at step S10, the microprocessor 14 controls the picture-capturing unit 121 to capture one picture from among input video data streams, for example, an I-picture at step S11.

The microprocessor 14 controls the MPEG decoder 120 to differently encode the I-picture captured by the picture-capturing unit 121 according to HQ/SQ/LQ/EQ recording qualities, and sequentially enables the first to fourth buffers 122, 123, 124 and 125, such that a still image encoded at the HQ recording quality is stored in the first buffer 122, a still image encoded at the SQ recording quality is stored in the second buffer 123, a still image encoded at the LQ recording quality is stored in the third buffer 124, and a still image encoded at the EQ recording quality is stored in the fourth buffer 125 at step S12.

If the encoding operations at the HQ/SQ/LQ/EQ recording qualities have been completed at step S13, the microprocessor 14 controls the menu graphic generator 13, such that it displays still images stored in the first to fourth buffers 122, 123, 124 and 125 on the recording-quality selection menu image at step S14.

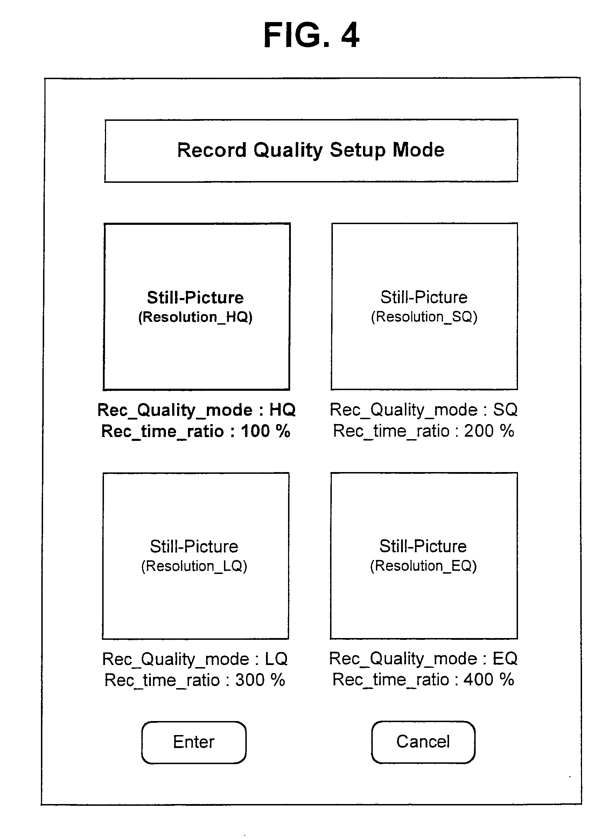

For example, a plurality of still images encoded at HQ/SQ/LQ/EQ recording qualities are displayed in the form of prescribed sizes on the recording-quality selection menu image shown in Fig. 4, and a relative recording-time ratio (Rec_time_ratio) in response to each recording quality is also displayed on each still image. In the case of the HQ recording quality, a recording-time ratio is determined to be 100%. In the case of the SQ recording quality, a recording-time ratio is determined to be 200%. In the case of the LQ recording quality, a recording-time ratio is determined to be 300%. In the case of the EQ recording quality, a recording-time ratio is determined to be 400%. The above-mentioned recording-quality time ratios can be displayed along with still images for every recording quality.

A cursor for allowing a user to select a corresponding recording quality may overlap with one still image displayed on the recording-quality selection menu image. For example, if a user desires to record high-quality video data, the user selects a still image of the HQ recording quality. If the user desires to record the lowest-quality video data for a long period of time, the user selects a still image of the EQ recording quality.

If the user selects one of the recording qualities using the above-mentioned process at step S15, the microprocessor 14 encodes and records input video data and input audio data at the user-selected recording quality at step S16. For example, if the user selects an HQ recording quality from among a plurality of recording qualities, the microprocessor 14 controls the MPEG encoder 120 to encode input video data at a bit rate of 9.72 Mbits/sec and to encode input audio data at a bit rate of 384 Kbits/sec, such that the recording of high-quality video data and high-quality video data is implemented. Otherwise, if the user selects an EQ recording quality, the microprocessor 14 controls the MPEG encoder 120 to encode input video data at a bit rate of 2.54 Mbits/sec and to encode input audio data at a bit rate of 256 Kbits/sec, such that the recording of the lowest-quality video data and standard-quality video data is implemented.

Therefore, the user can easily compare video-data qualities associated with individual recording qualities with one another, and can correctly select a desired recording quality from among a plurality of recording qualities.

In accordance with another preferred embodiment of the present invention, a recording-quality setup method does not use the picture-capturing unit 121 and the first to fourth buffers 122, 123, 124 and 125. If a user requests a recording-quality setup mode on the condition that a plurality of sample images corresponding to HQ/SQ/LQ/EQ recording qualities have been stored in the memory 15, the recording-quality setup method reads the sample images from the memory 15, and displays the read sample images on the recording-quality selection menu image. A detailed description associated with the above-mentioned operation will hereinafter be described with reference to the annexed drawings.

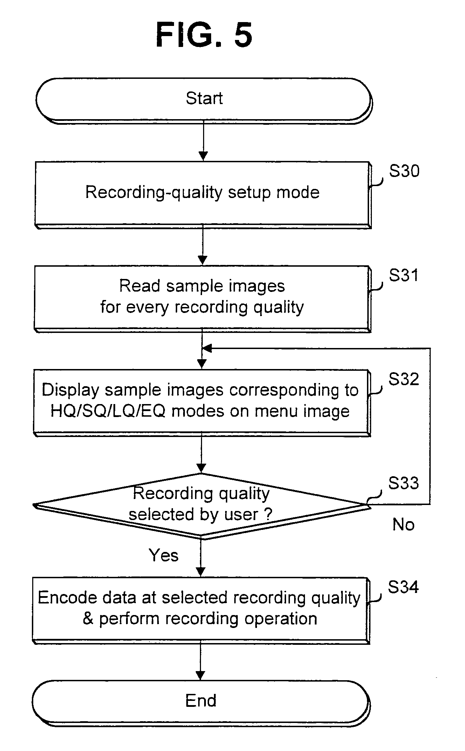

Fig. 5 is a flow chart illustrating a method for establishing a recording quality in a digital recording device in accordance with another preferred embodiment of the present invention. Referring to Fig. 5, if a user requests a recording-quality setup mode at step S30, the microprocessor 14 reads sample images having HQ/SQ/LQ/EQ recording qualities from the memory 15 at step S31.

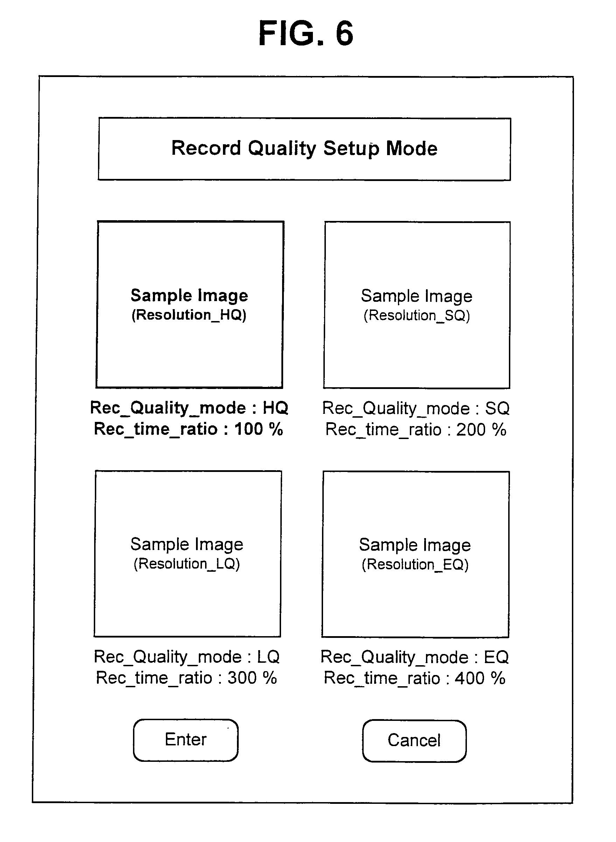

The microprocessor 14 controls the menu graphic generator 13 such that the read sample images can be displayed on the recording-quality selection menu image at step S32. For example, individual sample images of HQ/SQ/LQ/EQ recording qualities are displayed in the form of prescribed sizes on the recording-quality selection menu image shown in Fig. 6, and a relative recording-time ratio (Rec_time_ratio) in response to each recording quality is also displayed on each sample image. Also, a cursor for allowing a user to select a corresponding recording quality may overlap with one sample image displayed on the recording-quality selection menu image.

If a user selects one recording quality from among a plurality of recording qualities at step S33, the microprocessor 14 encodes and records input video data and input audio data at the user-selected recording quality at step S34.

As apparent from the above description, the present invention allows a user to correctly select a desired recording quality from among a plurality of recording qualities.

Also, the present invention allows the user to easily compare video-data qualities in response to individual recording qualities with one another.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for establishing a recording quality in a digital recording device, comprising the steps of:
displaying still images associated with a plurality of recording qualities having different levels on a recording-quality selection menu image; and
recording data streams at a recording quality selected through the recording-quality selection menu image.

2. The method according to claim 1, wherein the recording qualities having different levels are a High Quality (HQ) recording quality, a Standard Quality (SQ) recording quality, a Low Quality (LQ) recording quality, and an Extension Quality (EQ) recording quality.

3. The method according to claim 1, wherein the still images are generated while a picture captured from video streams being differently encoded at the recording qualities having different levels.

4. The method according to claim 3, wherein the picture captured from the video streams is indicative of an I-picture (Intra-Picture).

5. The method according to claim 1, wherein the still images are pre-stored in the digital recording device while being classified according to the recording qualities having different levels, and are read from the digital recording device.

6. The method according to claim 1, wherein the displaying step includes the step of:
displaying information associated with recording times for every recording quality along with the still images.
